# EUROPÄISCHE PATENTANMELDUNG

(11) **EP 4 606 554 A1**
(43) Veröffentlichungstag der Anmeldung: **27.08.2025**
(21) Anmeldenummer: 25157008.1
(22) Anmeldetag: 11.02.2025
(51) Int. Cl.: B29C 48/64, B29C 48/395, B29C 48/535, B29B 7/42

(54) **SCHNECKENELEMENT UND SYSTEM ZUM VERARBEITEN VON MASSE ZUM HERSTELLEN EINES REIFENS FÜR EIN KRAFTFAHRZEUG**

(30) Priorität: 20.02.2024 DE 102024201549
(71) Anmelder: Continental Reifen Deutschland GmbH, 30175 Hannover (DE)
(72) Erfinder: Wagner, Andre, 30175 Hannover (DE); Diekmann, Matthias, 30175 Hannover (DE); Dr. Sharifi, Monir, 30175 Hannover (DE)
(74) Vertreter: Continental Corporation

(57) **Zusammenfassung**

Ein Schneckenelement (10) zum Verarbeiten von Masse zum Herstellen eines Reifens für ein Kraftfahrzeug umfasst ein längliches Stabelement (14), das sich überwiegend entlang einer Längsachse (L) erstreckt. Das Schneckenelement (10) umfasst ferner einen ersten Helixabschnitt (11), der eine eingängige Helixform aufweist, welche an dem Stabelement (14) angeordnet ist und das Stabelement (14) vorgegeben helixförmig umgibt. Das Schneckenelement (10) umfasst außerdem einen zweiten Helixabschnitt (12), der eine zweigängige Helixform aufweist, welche an dem Stabelement (14) angeordnet ist und das Stabelement (14) vorgegeben helixförmig umgibt, wobei der erste Helixabschnitt (11) in Bezug auf eine vorgegebene Massenverarbeitungsrichtung (R) des Schneckenelements (10) vor dem zweiten Helixabschnitt (12) ausgebildet ist.

## Beschreibung

Die vorliegende Erfindung betrifft ein Schneckenelement und ein System zum Herstellen eines Reifens für ein Kraftfahrzeug.

Fahrzeuge weisen Reifen auf, die üblicherweise ein Gummibauteil in Form eines Kautschuk-Reifenprofils haben. Ein solcher Kautschuk-Reifen wird anhand eines Laufstreifens hergestellt, welcher üblicherweise mittels eines Extruders angefertigt wird. Ein Rohmaterial wird durch einen Trichter eingefüllt und in dem Extruder aufbereitet. Eine sich drehende Schnecke mischt das Material und befördert es bis zu einem Ausgang. Nachfolgend kann das Material als Materialbahn oder Laufstreifen für die Reifenherstellung weiterverarbeitet werden. Bei der Herstellung von Reifen oder zugehöriger Ausgangsprodukte ist es stets ein Anliegen, die Kosten gering zu halten und zudem einen sicheren und zuverlässigen Reifen anfertigen zu können.

Es ist eine Aufgabe, die der Erfindung zugrunde liegt, ein Schneckenelement und ein System zum Herstellen eines Reifens für ein Kraftfahrzeug bereitzustellen, die jeweils zu einer kostengünstigen Herstellung eines sicheren Reifens beitragen können.

Die Aufgabe wird jeweils durch die Merkmale der unabhängigen Patentansprüche gelöst. Vorteilhafte Weiterbildungen sind in den abhängigen Patentansprüchen angegeben.

Gemäß einem Aspekt der Erfindung umfasst ein Schneckenelement zum Verarbeiten von Masse zum Herstellen eines Reifens für ein Kraftfahrzeug ein längliches Stabelement mit einem ersten und einem zweiten Helixabschnitt. Das Stabelement erstreckt sich überwiegend entlang einer Längsachse. Das Stabelement ist vorzugsweise rotationssymmetrisch ausgebildet, sodass die Längsachse auch einer Rotationsachse entspricht. Der erste Helixabschnitt weist eine eingängige Helixform auf, welche an dem Stabelement angeordnet ist und das Stabelement vorgegeben helixförmig umgibt. Der zweite Helixabschnitt weist eine zweigängige Helixform auf, welche an dem Stabelement angeordnet ist und das Stabelement vorgegeben helixförmig umgibt. Der erste Helixabschnitt in Bezug auf eine vorgegebene Massenverarbeitungsrichtung des Schneckenelements vor dem zweiten Helixabschnitt ausgebildet ist.

Mittels des beschriebenen Schneckenelements kann zu einer kostengünstigen und sicheren Herstellung eines Reifens für ein Kraftfahrzeug beitragen werden. Das Schneckenelement bildet einen Teil eines Extruders zum Verarbeiten von Masse, wie Kautschuk, und ermöglicht aufgrund der beschriebenen Konfiguration einen erhöhten Durchsatz auch bei einer relativ geringen Massetemperatur und ermöglicht zudem eine zuverlässige Massestabilität, welche ein Maß für eine homogene Gewichtsverteilung der verarbeiteten Masse repräsentiert.

Gemäß einer bevorzugten Weiterbildung des Schneckenelements weist das Stabelement einen Einzugsabschnitt mit einer vorgegebenen Oberflächenstruktur auf, der bezogen auf die Massenverarbeitungsrichtung an einem antriebsseitigen Ende des Schneckenelements eingerichtet ist. Der erste Helixabschnitt ist bezogen auf die Massenverarbeitungsrichtung angrenzend zu dem Einzugsabschnitt und somit zwischen dem Einzugsabschnitt und dem zweiten Helixabschnitt ausgebildet. Sofern der Einzugsabschnitt eine andere Oberflächenstruktur als eine Helixform umfasst, richtet der erste Helixabschnitt an dem antriebsseitigen Ende den ersten helixförmigen Bereich des Schneckenelements ein. Das antriebsseitige Ende des Schneckenelements ist üblicherweise dazu eingerichtet, mit einem Antrieb, wie einem Elektromotor, gekoppelt zu werden, welcher das Schneckenelement zum Verarbeiten der einlaufenden Masse dreht. Ein ausgangsseitiges Ende des Schneckenelements ist dem antriebsseitigen Ende gegenüberliegend ausgebildet. Der erste Helixabschnitt ist demgemäß bevorzugt direkt an oder angrenzend zu dem antriebsseitigen Ende bzw. dem Einzugsabschnitt ausgebildet, welcher zudem eine Kopplung zu dem Antrieb ermöglicht. Der zweite Helixabschnitt ist demgemäß näher an dem ausgangsseitigen Ende ausgebildet als der erste Helixabschnitt.

In einem Betrieb des Schneckenelements in einem Extruder mischt und schiebt sie die Masse entlang der Massenverarbeitungsrichtung hin zum Ausgang, sodass nachfolgend eine Materialbahn oder Laufstreifen mit hoher Homogenität und Massenstabilität ausbildbar ist. Eine solcher Laufstreifen bildet eine spätere Fläche in oder an dem Reifen aus, der als Gummibauteil eine Komponente eines LKWs, eines PKWs oder einer Landwirtschaftsmaschine einrichten kann. Mittels des Schneckenelements ist es möglich, zu einer möglichst homogenen und fehlerarmen Fläche des Laufstreifens beizutragen.

Die jeweiligen Helixformen sind insbesondere einstückig mit der Stabelement ausgebildet und weisen Zähne oder Schneckenstege auf, die das Stabelement vorgegeben spiralförmig umlaufen. Bei dem ersten Helixabschnitt ist ein Zahn bzw. Schneckensteg vorgeben ausgebildet, der das Stabelement helixförmig umgibt und demgemäß eine Gangzahl von eins einrichtet. Bei dem zweiten Helixabschnitt sind zwei Zähne vorgegeben ausgebildet, die jeweils das Stabelement helixförmig umgeben und demgemäß eine Gangzahl von zwei einrichten. Die zweigängige Helixform ist zum Beispiel stufig ausgeführt, sodass ist ein schmaler, spiralförmig umlaufender Zahn auf einem breiteren, spiralförmig umlaufenden Zahn ausgebildet ist, die demgemäß eine unterschiedliche Dicke und/oder Steigung aufweisen. Alternativ oder zusätzlich ist die zweigängige Helixform dadurch gegeben, dass sie in Bezug auf eine Ganghöhe einer Helixform eine dazwischenliegende zweite Helixform aufweist. Die Ganghöhe bezieht sich dabei auf einen Abstand der spiralförmig umlaufenden Bahn, an dem die Bahn rotationsbezogen wieder an ihrem Anfangswinkel ist, beispielsweise angefangen bei 0° und dann wieder bei 360°. Insbesondere sind eine jeweilige Dicke, Steigung, Gangtiefe, Ganghöhe und/oder Gangzahl der eingängigen und zweigängigen Helixform der jeweiligen Helixabschnitte in Abstimmung aufeinander ausgebildet und in Bezug auf die zu verarbeitende Masse und den Einsatz des Schneckenelements in einem Extruder vorgegeben. Insbesondere weisen die eingängige Helixform des ersten Helixabschnitts und die zweigängige Helixform des zweiten Helixabschnitt eine unterschiedliche Steigung auf. Die Begriffe "Helixabschnitt" und "Zahn" können auch als Schneckenwelle und Schneckensteg bezeichnet werden.

Es ist eine Erkenntnis im Zusammenhang mit der vorliegenden Erfindung, dass das die Anordnung des eingängigen Helixabschnitts vor dem zweigängigen Helixabschnitt, insbesondere als erster helixförmiger Bereich des Schneckenelements, einen hohen Durchsatz der Masse bei geringer Temperatur und hoher Massenstabilität ermöglicht. Gemäß einer weiteren Weiterbildung des Schneckenelements weist das Stabelement zusammen mit dem jeweiligen Helixabschnitt einen vorgegeben Durchmesser quer zu der Längsachse auf. Das Schneckenelement weist ferner eine vorgegebene Länge auf, die in Abhängigkeit von dem Durchmesser ausgebildet ist. Die Länge hat vorzugsweise einen Wert, der einschließlich dem 12- bis 16-fachen des Extruderdurchmessers entspricht. Beispielsweise ist der Durchmesser mit einem Wert zwischen einschließlich 125 mm bis 175 mm gegeben, sodass eine Länge des Schneckenelements vorzugsweise einen Wert zwischen 1500 mm bis 2800 mm aufweist. Der Extruderdurchmesser kann zum Beispiel einen Wert zwischen einschließlich 30 mm bis 300 mm aufweisen.

Gemäß einer Weiterbildung des Schneckenelements sind der erste Helixabschnitt und der zweite Helixabschnitt direkt aneinander angrenzend ausgebildet. Eine angrenzende Ausbildung ist zum Beispiel gegeben, wenn die Helixform im Wesentlichen fortgeführt wird, aber andere Formparameter, wie die Steigung aufweist. Alternativ können der erste und zweite Helixabschnitt vorgegeben beabstandet voneinander ausgebildet sein. Eine beanstandete Ausbildung ist zum Beispiel gegeben, wenn die Helixform erst in einem vorgegebenen Abstand zu der anderen Helixform beginnt und nicht fortgeführt wird, wie es bei einer angrenzenden Ausbildung gegeben wäre.

Gemäß einer weiteren Weiterbildung kann das Schneckenelement einen dritten oder weitere Helixabschnitte umfassen, welche eine eingängige oder zweigängige Helixform aufweisen. Die Helixform des dritten Helixabschnitts ist ebenfalls an dem Stabelement angeordnet und umgibt dieses mit einer vorgegebenen Geometrie. Der dritte Helixabschnitt in Bezug auf die Massenverarbeitungsrichtung nach dem zweiten Helixabschnitt und insbesondere nach dem ersten Helixabschnitt ausgebildet ist. Eine jeweilige Dicke, Steigung und/oder Gangzahl der Helixform des dritten und/oder weiterer Helixabschnitte sind insbesondere in Abstimmung aufeinander ausgebildet und in Bezug auf die zu verarbeitende Masse und den Einsatz des Schneckenelements in einem Extruder vorgegeben.

Gemäß einem weiteren Aspekt der Erfindung umfasst ein System zum Verarbeiten von Masse zum Herstellen eines Reifens für ein Kraftfahrzeug einen Extruder, und eine Ausgestaltung des zuvor beschriebenen Schneckenelements, das in dem Extruder angeordnet ist. Die Konfiguration des Schneckenelements ermöglicht es insbesondere auch, dass dieses in einem Kalteinzug-Extruder eingesetzt wird und zu einem erhöhten Durchsatz bei geringerer Massetemperatur und hoher Massestabilität der zu verarbeitenden Masse beiträgt. Eine Temperatur der Masse mit einem Wert zwischen 0°C und 150°C kann als vortemperiert bezeichnet werden. Beispielsweise hat die vortemperierte Masse eine Temperatur von 50°C, 60°C, 70°C, 80°C, 90°C oder 100°C. Die Temperatur der zu verarbeitenden Masse ist auf andere Parameter, wie einen erforderlichen Durchlauf und eine vorhandene Kapazität des Extruders sowie die Mooney-Viskosität der Masse abzustimmen.

Dadurch, dass das System eine Ausführungsform des Schneckenelements umfasst, sind Vorteile und Eigenschaften, die im Zusammenhang mit dem Schneckenelement beschrieben sind, auch für das System offenbart und umgekehrt.

Mittels des beschriebenen Schneckendesigns können Kapazitätsverluste in einem Kalteinzug-Extruder bei vorgewärmtem Material vermieden oder zumindest deutlich reduziert werden und zudem ein hohes Stabilitätsniveau der verarbeiteten Masse erreicht werden. Der beschriebene Aufbau des Schneckenelements ermöglicht es somit vorgewärmtes Material mit Hilfe eines Kalteinzug-Extruders zu extrudieren. Das Schneckenelement ermöglicht bei gleicher oder bisheriger Produktionsgeschwindigkeit zu arbeiten im Vergleich zur konventionellen Extrusion mit kaltem Einzug. Darüber hinaus ermöglicht das Schneckenelement auch die Verwendung von Stiftelementen und trägt zu einer stabilen Produktion der verarbeiteten Masse bei. Das Schneckenelement ist insbesondere im Hinblick auf ein Verarbeiten von Masse und Herstellen eines Reifens hin ausgebildet, kann aber darüber hinaus auch Anwendung in anderen Bereichen finden, in denen ein zuverlässiges und vorteilhaftes Verarbeiten von Material in einem Extruder nutzbringend ist, zum Beispiel auf dem Gebiet der Kautschukindustrie oder der Industrialisierung von hochviskosen Mischungen.

Im Folgenden sind Ausführungsbeispiele der Erfindung anhand schematischer Zeichnungen erläutert. Es zeigen:
- Figur 1: ein schematisches Ausführungsbeispiel eines Schneckenelements für einen Extruder zum Verarbeiten von Masse zum Herstellen eines Reifens für ein Kraftfahrzeug, und
- Figur 2: ein Ausführungsbeispiel eines Systems zum Verarbeiten von Masse zum Herstellen eines Reifens für ein Kraftfahrzeug.

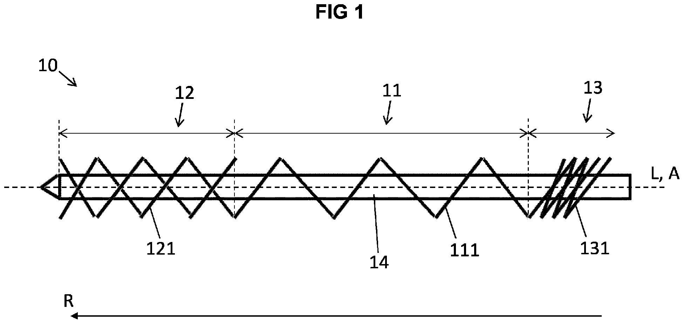

Figur 1 zeigt schematisch in einer Seitenansicht ein Ausführungsbeispiel eines Schneckenelements 10 für einen Extruder 2 zum Verarbeiten von Masse zum Herstellen eines Reifens für ein Kraftfahrzeug. Das Schneckenelement 10 umfasst ein längliches Stabelement 14, das sich überwiegend entlang einer Längsachse L erstreckt. Das Schneckenelement 10 umfasst weiter einen Einzugsabschnitt 13 mit einer vorgegebenen Oberflächenstruktur 131, welcher bezogen auf eine Massenverarbeitungsrichtung R an einem antriebsseitigen Ende des Schneckenelements 10 eingerichtet ist. Angrenzend zu dem Einzugsabschnitt 13 weist das Schneckenelement einen ersten Helixabschnitt 11 auf, der eine eingängige Helixform 111 umfasst, welche an dem Stabelement 14 angeordnet ist und das Stabelement 14 vorgegeben helixförmig umgibt.

Das Schneckenelement 10 weist außerdem einen zweiten Helixabschnitt 12 auf, der eine zweigängige Helixform 121 umfasst, welche an dem Stabelement 14 ausgebildet ist und das Stabelement 14 vorgegeben helixförmig umgibt. Der erste Helixabschnitt 11 ist in Bezug auf eine vorgegebene Massenverarbeitungsrichtung R des Schneckenelements 10 vor dem zweiten Helixabschnitt 12 ausgebildet ist. Der erste Helixabschnitt 11 ist ferner angrenzend zu dem zweiten Helixabschnitt 12 und zwischen diesem und dem Einzugsabschnitt 13 eingerichtet.

Aufgrund der beschriebenen Ausbildung der Helixabschnitte 11 und 12 kann zu einer kostengünstigen und sicheren Herstellung eines Reifens für ein Kraftfahrzeug beitragen werden. Eine jeweilige eingängige oder zweigängige Helixform ist jeweils insbesondere durch ihre Steigung, ihre Gangtiefe, Ganghöhe, Gangzahl und/oder ihren Durchmesser bestimmt und im Hinblick auf eine Länge des Schneckenelements 10 angepasst. Zum Beispiel weist das Schneckenelement 10 eine Länge von 12-18D auf, wobei D den Durchmesser des Schneckenelements 10 repräsentiert. Der Durchmesser D hat beispielsweise einen Wert zwischen einschließlich 125-175 mm.

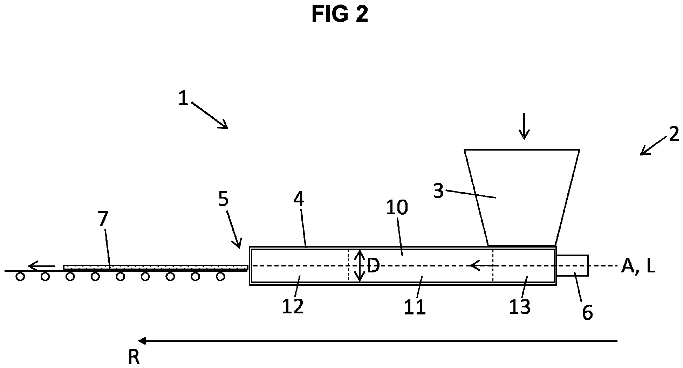

Der Einzugsabschnitt 13 bildet eine Einzugszone für das zu verarbeitende Material und dient insbesondere der Feststoffförderung. Der Einzugsabschnitt 13 weist zum Beispiel eine Länge von 1,5-2,5D auf. Der erste Helixabschnitt 11 bildet eine Kompressionszone für das zu verarbeitende Material und dient ferner dem Aufschmelzen des Materials. Der erste Helixabschnitt 11 weist zum Beispiel eine Länge von 7,5-9,5D auf. Der zweite Helixabschnitt 12 bildet eine Meterringzone und richtet eine Schmelzeförderung ein. Der zweite Helixabschnitt 12 weist zum Beispiel eine Länge von 4-6D auf. Demgemäß ist der eingängige erste Helixabschnitt 11 vorzugsweise länger als der zweigängige zweite Helixabschnitt 12, welcher wiederum länger ist als der Einzugsabschnitt 13. Der eingängige Helixabschnitt 11 ist somit vorzugsweise am längsten ausgebildet. Der Durchmesser kann sich insbesondere auf den Extruderdurchmesser D beziehen, wie in Figur 2 angedeutet.

Figur 2 zeigt in einer schematischen Ansicht ein System 1 mit einem Extruder 2, insbesondere einem Kalteinzug-Extruder, in dem das Schneckenelement 10 zum Verarbeiten des eingespeisten Materials angeordnet ist. Das Material oder das Materialgemisch wird vortemperiert, beispielsweise mit einer Temperatur zwischen 40°-150°C, in einen Behälter 3 des Extruders 2 eingespeist und mittels des Schneckenelements 10 in einem Schneckenzylinder 4 gemischt und entlang der Massenverarbeitungsrichtung R zu einem Ausgang 5 des Schneckenzylinders 4 getrieben. Das Schneckenelement 10 wird mittels einer Antriebseinheit 6, zum Beispiel einem Elektromotor, angetrieben und in Rotation versetzt. Die Längsachse L des Schneckenelements 10 entspricht demgemäß auch einer Rotationsachse A. Nach Austritt der verarbeiteten Masse durch den Ausgang 5 kann ein Laufstreifen 7 ausgeformt werden, welcher eine Materialbahn zum Herstellen eines Reifens für ein Kraftfahrzeug ausbildet.

Das Schneckenelement 10 in dem Extruder 2 ermöglicht ein vorteilhaftes Verarbeiten von Masse, wie Kautschuk, zum Ausbilden des Laufstreifens 7 zum Herstellen einer Reifenoberfläche eines Reifens für ein Kraftfahrzeug. Aufgrund der beschriebenen Konfiguration ermöglicht das Schneckenelements 10 einen erhöhten Durchsatz des zu verarbeitenden Materials auch bei einer relativ geringen Massetemperatur und trägt zudem zu einer zuverlässigen Massestabilität bei, welche ein Maß für eine homogene Gewichtsverteilung der verarbeiteten Masse in dem Laufstreifen 7 repräsentiert.

### Bezugszeichenliste

- 1: System
- 2: Extruder
- 3: Behälter
- 4: Schneckenzylinder
- 5: Ausgang des Schneckenzylinders
- 6: Antriebseinheit
- 7: Laufstreifen
- 10: Schneckenelement
- 11: erster Helixabschnitt
- 111: Helixform des ersten Helixabschnitts
- 12: zweiter Helixabschnitt
- 111: Helixform des ersten Helixabschnitts
- 13: Einzugsabschnitt
- 131: Oberflächenstruktur des Einzugsabschnitts
- 14: Stabelement

- A: Rotationsachse des Schneckenelements
- L: Längsachse des Schneckenelements
- R: Massenverarbeitungsrichtung

## Patentansprüche

1. Schneckenelement (10) zum Verarbeiten von Masse zum Herstellen eines Reifens für ein Kraftfahrzeug, umfassend:
- ein längliches Stabelement (14), das sich überwiegend entlang einer Längsachse (L) erstreckt,
- einen ersten Helixabschnitt (11), der eine eingängige Helixform (111) aufweist, welche an dem Stabelement (14) angeordnet ist und das Stabelement (14) vorgegeben helixförmig umgibt, und
- einen zweiten Helixabschnitt (12), der eine zweigängige Helixform (121) aufweist, welche an dem Stabelement (14) angeordnet ist und das Stabelement (14) vorgegeben helixförmig umgibt, wobei der erste Helixabschnitt (11) in Bezug auf eine vorgegebene Massenverarbeitungsrichtung (R) des Schneckenelements (10) vor dem zweiten Helixabschnitt (12) ausgebildet ist.

2. Schneckenelement (10) nach Anspruch 1, bei dem das Stabelement (14) einen Einzugsabschnitt (13) mit einer vorgegebenen Oberflächenstruktur (131) aufweist, der bezogen auf die Massenverarbeitungsrichtung (R) an einem antriebsseitigen Ende des Schneckenelements (10) eingerichtet ist, wobei der erste Helixabschnitt (11) bezogen auf die Massenverarbeitungsrichtung (R) angrenzend zu dem Einzugsabschnitt (13) zwischen diesem und dem zweiten Helixabschnitt (12) ausgebildet ist.

3. Schneckenelement (10) nach einem der vorhergehenden Ansprüche, bei dem das Stabelement (14) zusammen mit dem jeweiligen Helixabschnitt (11, 12) einen jeweils vorgegeben Durchmesser (D) quer zu der Längsachse (L) aufweist, wobei das Schneckenelement (10) mit einer vorgegebenen Länge (L) in Abhängigkeit von dem jeweiligen Durchmesser (D) ausgebildet ist, welche einen Wert zwischen dem einschließlich 12- bis 16-fachen des Durchmessers (D) aufweist.

4. Schneckenelement (10) nach Anspruch 3, bei dem das Stabelement (14) zusammen mit dem jeweiligen Helixabschnitt (11, 12) einen Durchmesser mit einem Wert zwischen einschließlich 125 mm bis 175 mm aufweist.

5. Schneckenelement (10) nach einem der vorhergehenden Ansprüche, bei dem der erste Helixabschnitt (11) und der zweite Helixabschnitt (12) aneinander angrenzend ausgebildet sind.

6. Schneckenelement (10) nach einem der Ansprüche 1 bis 4, bei dem der erste Helixabschnitt (11) und der zweite Helixabschnitt (12) vorgegeben beabstandet voneinander ausgebildet sind.

7. Schneckenelement (10) nach einem der vorhergehenden Ansprüche, bei dem die eingängige Helixform des ersten Helixabschnitts (11) und die zweigängige Helixform des zweiten Helixabschnitt (12) jeweils eine Steigung aufweisen, die unterschiedlich ausgebildet sind.

8. Schneckenelement (10) nach einem der vorhergehenden Ansprüche, aufweisend:
einen dritten Helixabschnitt, der eine eingängige oder zweigängige Helixform aufweist, welche an dem Stabelement (14) angeordnet ist und das Stabelement (14) vorgegeben helixförmig umgibt, wobei der dritte Helixabschnitt in Bezug auf die Massenverarbeitungsrichtung (R) nach dem zweiten Helixabschnitt (12) ausgebildet ist.

9. System zum Verarbeiten von Masse zum Herstellen eines Reifens für ein Kraftfahrzeug, aufweisend:
- einen Extruder, und
- ein Schneckenelement (10) gemäß einem der vorhergehenden Ansprüche, das in dem Extruder angeordnet ist.

10. System nach Anspruch 9, bei dem der Extruder ein Kalteinzug-Extruder ist.
